# EUROPEAN PATENT SPECIFICATION

(11) **EP 3 902 447 B1**
(45) Date of publication and mention of the grant of the patent: **10.08.2022**
(21) Application number: 19816627.4
(22) Date of filing: 04.12.2019
(51) Int. Cl.: A47J 31/057, A47J 31/44

(54) **A HOT BEVERAGE PREPARATION MACHINE**
MASCHINE ZUR ZUBEREITUNG HEISSER GETRÄNKE
MACHINE DE PRÉPARATION DE BOISSON CHAUDE

(30) Priority: 26.12.2018 TR 201820571
(43) Date of publication of application: 03.11.2021
(73) Proprietor: Arçelik Anonim Sirketi, 34445 Istanbul (TR)
(72) Inventor: TOSUN, Isa, 34950 ISTANBUL (TR); KAYISDAG, Varol, 34950 Istanbul (TR); OZBEK, Hale, 34950 Istanbul (TR); MUTLUDOGAN, Mehmet, 34950 Istanbul (TR); OZTURK, Tansel, 34950 Istanbul (TR)
(86) International application number: PCT/EP2019/083576
(87) International publication number: WO 2020/135987

(56) References cited:
- WO-A2-2015/016793
- US-A1- 2009 007 792

## Description

The present invention relates to a hot beverage preparation machine for automatically preparing beverages.

In hot beverage preparation machines, the water filled into the water reservoir is heated by a water heater and is transferred to the brewing chamber containing raw beverage material to be prepared. The brewing process is performed in the brewing chamber as a result of the interaction between the raw beverage material and water. The brewed beverage is afterwards transferred into a pot and served. The period of time the raw beverage material interacts with the water is one of the important parameters which defines the brew strength, hence the taste of the beverage. In the state of the art, machines are known which carry out brewing process for certain periods of time as per user selection. After staying in the brewing chamber for a certain period of time, the beverage is transferred into the pot. Thus, the taste of the beverage remains the same and fresh after brewing. The boiling water is delivered to the brewing chamber by means of a line and transferred into the brewing chamber through an opening. In order to brew a quality beverage, the water is transferred into the brewing chamber after reaching 100 degrees. In case the user opens the cover of the brewing chamber while the water is being transferred into the brewing chamber, the hot water may be scattered around. This endangers the safety of the user.

In the state of the art European Patent Document No. EP3027094, a hot beverage preparation machine is disclosed, wherein the boiling water is transferred into the brewing chamber.

The aim of the present invention is the realization of a hot beverage preparation machine with increased safety.

The hot beverage preparation machine realized in order to attain the aim of the present invention and explicated in the claims, comprises a body; a water reservoir which is placed onto the body and wherein the brewing water is heated; a brewing chamber wherein the brewing process is performed as a result of the interaction between raw beverage material and water; a cover which cuts off the contact between the brewing chamber and the outer environment; a housing which is situated on the body; and a pot which is situated on the housing so as to allow the beverage brewed in the brewing chamber to be distilled therein. The lid has an open position and a closed position. When the cover is in the open position, the user can access the brewing chamber. When the cover is in the closed position, the brewing chamber is isolated from the outer environment. The water is delivered to the brewing chamber via a delivery line. When the brewing process is completed, the hot beverage is distilled from the brewing chamber to the pot and separated from the raw beverage material. Thus, the taste of the beverage obtained momentarily during the brewing process is kept for a longer time and the beverage is prevented from getting stale.

The hot beverage preparation machine of the present invention comprises a safety member which squeezes the delivery line when the cover is in the open position. By means of the safety member, if the cover is changed to the open position during the delivery of water, the delivery line gets squeezed, decreasing the flow rate of water. Thus, the hot water is prevented from splattered on the user.

In an embodiment of the present invention, the hot beverage preparation machine comprises the safety member which is provided between the cover and the body. The safety member extends perpendicularly to the delivery line when the cover is in the open position and squeezes the delivery line. When the cover is changed to the closed position, the delivery line bends over the safety member to extend into the brewing chamber.

In an embodiment of the present invention, the hot beverage preparation machine comprises a pump which draws water from the water reservoir to be delivered via the delivery line. Since the flow rate of water decreases when the cover is changed to the open position, the position of the cover can be detected by means of a control unit. Thus, as a safety measure, the flow through the delivery line is cut off.

In an embodiment of the present invention, the hot beverage preparation machine comprises a manometer which is provided on the delivery line and the control unit which controls the water flow depending on the information received from the manometer. By means of the control unit which detects that the cover is in the open position as the water pressure decreases, the water flow through the delivery line is cut off. Thus, the safety of the user is ensured.

In an embodiment of the present invention, the hot beverage preparation machine comprises a shutter which is provided on the delivery line. When the cover is changed to the open position, the control unit closes the shutter. Thus, the water flow through the delivery line is prevented, ensuring the safety of the user.

In an embodiment of the present invention, the hot beverage preparation machine comprises at least one channel which is provided on the cover. The channel is arranged on the surface of the cover remaining in the brewing chamber. By means of the channels, when the cover is changed to the open position, the water and water vapor on the cover trickles down into the brewing chamber.

In an embodiment of the present invention, the hot beverage preparation machine comprises a flow port which is arranged on the cover and which provides the delivery of the water into the brewing chamber. One end of the delivery line is connected to the flow port. A safety cap which can be unidirectionally opened from the cover towards the brewing chamber is provided on the flow port. Thus, when the water pressure decreases, the flow is prevented.

By means of the present invention, when the user changes the cover of the brewing chamber to the open position while the hot water is being delivered, the hot water is prevented from splattering onto the user. Thus, the safety of the user is ensured.

The hot beverage preparation machine realized in order to attain the aim of the present invention is illustrated in the attached figures, where:

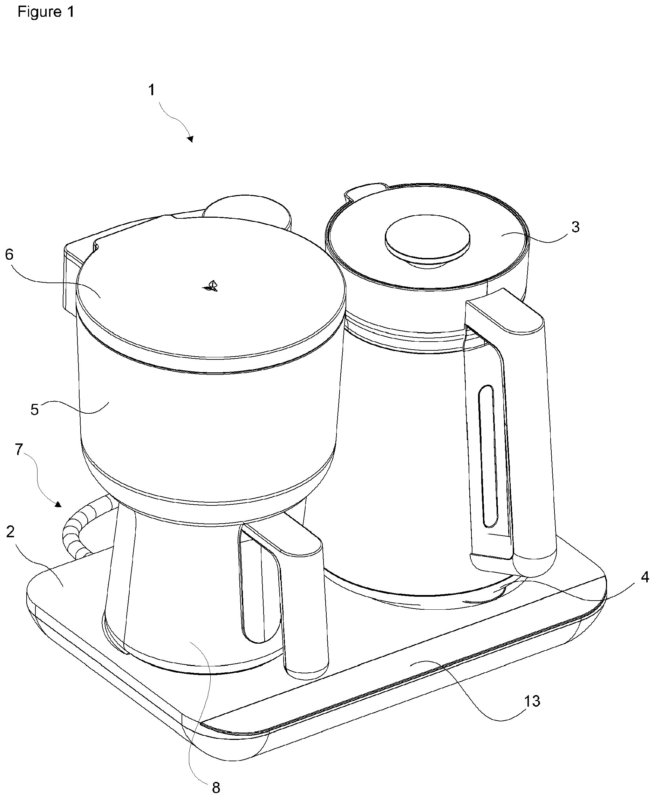

Figure 1 - is the perspective view of the hot beverage preparation machine.

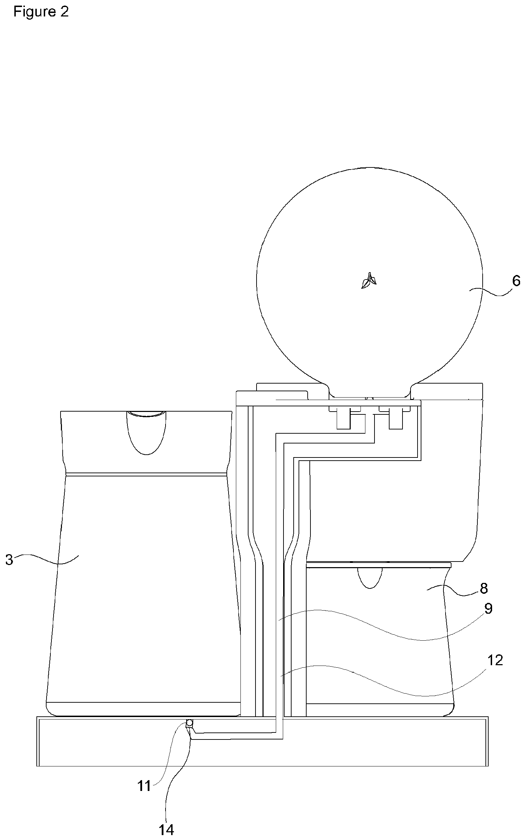

Figure 2 - is the view of the delivery line on the hot beverage preparation machine.

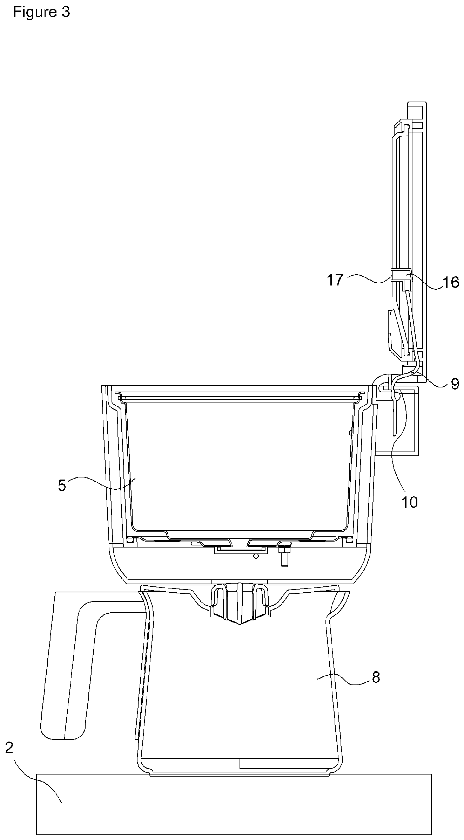

Figure 3 - is the sideways view of the brewing chamber and the pot when the cover is in the open position.

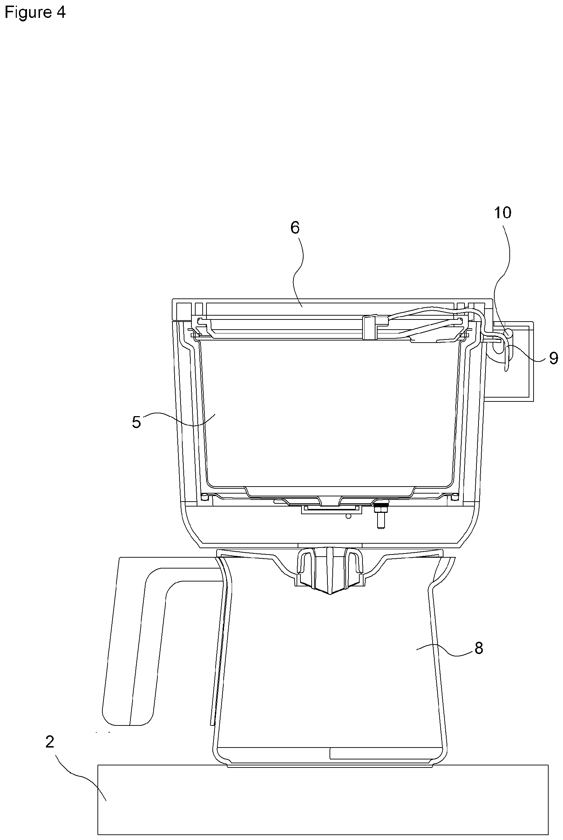

Figure 4 - is the sideways view of the brewing chamber and the pot when the cover is in the closed position.

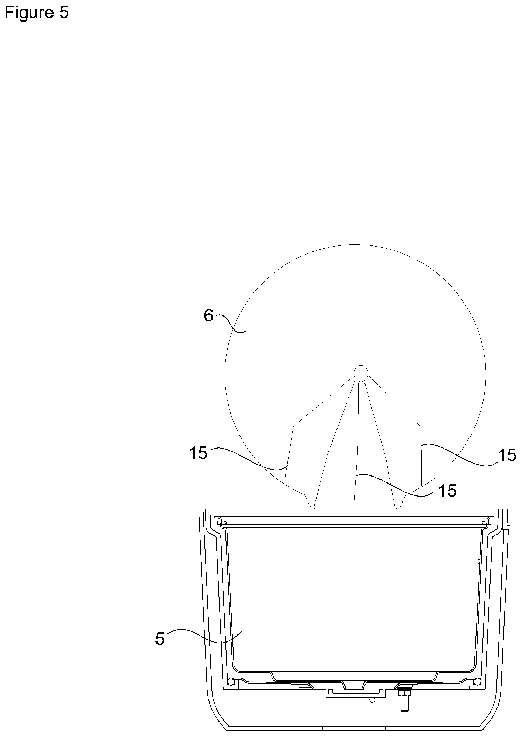

Figure 5 - is the schematic view of the channels on the cover.

The elements illustrated in the figures are numbered as follows:
1. Hot beverage preparation machine
2. Body
3. Water reservoir
4. Water heater
5. Brewing chamber
6. Cover
7. Housing
8. Pot
9. Delivery line
10. Safety member
11. Pump
12. Manometer
13. Control unit
14. Shutter
15. Channel
16. Flow port
17. Safety cap

The hot beverage preparation machine (1) comprises a body (2); a water reservoir (3) wherein water is filled; a water heater (4) enabling the water in the water reservoir (3) to be heated; a brewing chamber (5) wherein the raw material of the beverage to be prepared is put and whereto the water heated in the water reservoir (3) is transferred, wherein the brewing process is performed as a result of the interaction between the raw beverage material and water; a cover (6) which has a closed position wherein the brewing chamber (5) is isolated from the outer environment and an open position wherein the user can access the brewing chamber (5); a housing (7) which is situated on the body (2), under the brewing chamber (5); a pot (8) which is placed into the housing (7), the top surface thereof being at least partially open and whereto the beverage brewed in the brewing chamber (5) is transferred; and a delivery line (9) which provides the delivery of the water heated in the water reservoir (3) to the brewing chamber (5). The raw material of the beverage is put into the brewing chamber (5) by the user. By taking the water boiled by means of the water heater (4) into the brewing chamber (5), the beverage is brewed for a period of time. The prepared beverage at the completion of the brewing process is transferred from the brewing chamber (5) into the pot (7).

The hot beverage preparation machine (1) of the present invention comprises a safety member (10) which squeezes the delivery line (9) when the user changes the cover (6) to the open position when the water is being delivered to the brewing chamber (5) such that the delivery of the water is cut off. By means of the safety member (10), when the user changes the cover (6) to the open position as the hot water is being delivered from the water reservoir (3) to the brewing chamber (5), the delivery line (9) is squeezed. Thus, the pressure of the water flowing through the delivery line (9) is decreased, cutting off the flow.

In an embodiment of the present invention, the hot beverage preparation machine (1) comprises the safety member (10) which is provided between the cover (6) and the body (2), which extends perpendicularly to the delivery line (9) when the cover (6) is in the open position so as to squeeze the delivery line (9), and which enables the delivery line (9) extending from the body (2) to bend so as to extend into the brewing chamber (5) when the cover (6) is in the closed position. The safety member (10) extends perpendicularly to the delivery line (9) from the body (2). When the cover (6) is changed to the closed position, the delivery line (9) bends over the safety member (10) to extend into the brewing chamber (5).

In an embodiment of the present invention, the hot beverage preparation machine (1) comprises a pump (11) which draws water from the water reservoir (3) so as to flow through the delivery line (9), and a control unit (13) which detects that the cover (6) is changed to the open position when the flow rate of the water flowing through the delivery line (9) decreases and thus stops the pump (11) and cuts off the flow through the delivery line (9). When the cover (6) is changed to the open position, the pressure of the water flowing through the delivery line (9) decreases. As the water pressure detected by the control unit (13) decreases, the cover (6) is detected to be changed to the open position, and the pump (11) is triggered by the control unit (13) to cut off the flow. Thus, the hot water is prevented from being delivered to the brewing chamber (5).

In an embodiment of the present invention, the hot beverage preparation machine (1) comprises a manometer (12) which is provided on the delivery line (9), and the control unit (13) which detects that the cover (6) is changed to the open position depending on the information received from the manometer (12) when the flow rate of the water flowing through the delivery line (9) decreases and thus cuts off the flow. By means of the manometer (12), the pressure of the water flowing through the delivery line (9) is measured. When the cover (6) is changed to the open position, the water pressure decreases. The control unit (13) cuts off the water flow depending on the information received from the manometer (12). Thus, the safety of the user is ensured.

In an embodiment of the present invention, the hot beverage preparation machine (1) comprises a shutter (14) which is provided on the delivery line (9), and the control unit (13) which closes the shutter (14) when the cover (6) is changed to the open position, thus preventing the water flow through the delivery line (9). Upon detecting that the cover (6) is changed to the open position, the control unit (13) closes the shutter (14). Thus, the hot water flow through the delivery line (9) is stopped, preventing the water from being delivered into the brewing chamber (5).

In an embodiment of the present invention, the hot beverage preparation machine (1) comprises at least one channel (15) which is positioned on the surface of the cover (6) remaining in the brewing chamber (5) when the cover (6) is closed and which, when the cover (6) is in the open position, enables the water trickling down the cover (6) to be delivered into the brewing chamber (5) without scattering. The hot water reaching the cover (6) at a low pressure trickles down the channels (15) into the brewing chamber (5) when the cover (6) is in the open position. Thus, the water is enabled to flow in a controlled manner.

In an embodiment of the present invention, the hot beverage preparation machine (1) comprises a flow port (16) which is arranged on the end of the delivery line (9) on the cover (6) and which provides the delivery of the water into the brewing chamber (5), and a safety cap (17) which is provided on the flow port (16) and which can be unidirectionally opened from the cover (6) towards the brewing chamber (5). By means of the safety cap (17), the low-pressure hot water reaching the cover (6) when the cover (6) is changed to the open position is prevented from leaving via the cover (6).

By means of the present invention, a hot beverage preparation machine (1) is realized wherein the user safety is improved. When the user changes the cover (6) to the open position while the hot water boiling in the water reservoir (3) is being delivered to the brewing chamber (5), the hot water is prevented from splattering onto the user by means of the safety member (10). The safety member (10) squeezes the delivery line (9), thus decreasing the water pressure and cutting off the flow.

## Claims

1. A hot beverage preparation machine (1) **comprising**
- a body (2);
- a water reservoir (3) wherein water is filled;
- a water heater (4) enabling the water in the water reservoir (3) to be heated;
- a brewing chamber (5) wherein the raw material of the beverage to be prepared is put and whereto the water heated in the water reservoir (3) is transferred, wherein the brewing process is performed as a result of the interaction between the raw beverage material and water;
- a cover (6) which has a closed position wherein the brewing chamber (5) is isolated from the outer environment and an open position wherein the user can access the brewing chamber (5);
- a housing (7) which is situated on the body (2), under the brewing chamber (5);
- a pot (8) which is placed into the housing (7), the top surface thereof being at least partially open and whereto the beverage brewed in the brewing chamber (5) is transferred; and
- a delivery line (9) which provides the delivery of the water heated in the water reservoir (3) to the brewing chamber (5),
- **characterized by** a safety member (10) which squeezes the delivery line (9) when the user changes the cover (6) to the open position when the water is being delivered to the brewing chamber (5) such that the delivery of the water is cut off.

2. A hot beverage preparation machine (1) as in Claim 1, **characterized by** the safety member (10) which is provided between the cover (6) and the body (2), which extends perpendicularly to the delivery line (9) when the cover (6) is in the open position so as to squeeze the delivery line (9), and which enables the delivery line (9) extending from the body (2) to bend so as to extend into the brewing chamber (5) when the cover (6) is in the closed position.

3. A hot beverage preparation machine (1) as in Claim 1 or Claim 2, **characterized by** a pump (11) which draws water from the water reservoir (3) so as to flow through the delivery line (9), and a control unit (13) which detects that the cover (6) is changed to the open position when the flow rate of the water flowing through the delivery line (9) decreases and thus stops the pump (11) and cuts off the flow through the delivery line (9).

4. A hot beverage preparation machine (1) as in any one of the above claims, **characterized by** a manometer (12) which is provided on the delivery line (9), and the control unit (13) which detects that the cover (6) is changed to the open position depending on the information received from the manometer (12) when the flow rate of the water flowing through the delivery line (9) decreases and thus cuts off the flow.

5. A hot beverage preparation machine (1) as in Claim 4, **characterized by** a shutter (14) which is provided on the delivery line (9), and the control unit (13) which closes the shutter (14) when the cover (6) is changed to the open position, thus preventing the water flow through the delivery line (9).

6. A hot beverage preparation machine (1) as in any one of the above claims, **characterized by** at least one channel (15) which is positioned on the surface of the cover (6) remaining in the brewing chamber (5) when the cover (6) is closed and which, when the cover (6) is in the open position, enables the water trickling down the cover (6) to be delivered into the brewing chamber (5) without scattering.

7. A hot beverage preparation machine (1) as in any one of the above claims, **characterized by** a flow port (16) which is arranged on the end of the delivery line (9) on the cover (6) and which provides the delivery of the water into the brewing chamber (5), and a safety cap (17) which is provided on the flow port (16) and which can be unidirectionally opened from the cover (6) towards the brewing chamber (5).

## Patentansprüche

1. Eine Heißgetränkezubereitungsmaschine (1) **umfasst**
- einen Körper (2);
- einen Wasserbehälter (3), in dem Wasser gefüllt wird;
- einen Wassererhitzer (4), der es ermöglicht, das Wasser im Wasserbehälter (3) zu erhitzen;
- eine Brühkammer (5), in die der Rohstoff des zuzubereitenden Getränks gegeben wird und in die das im Wasserbehälter (3) erhitzte Wasser überführt wird, wobei der Brühprozess als Ergebnis der Wechselwirkung zwischen dem Getränkerohmaterial und Wasser durchgeführt wird;
- eine Abdeckung (6), die eine geschlossene Position aufweist, in der die Brühkammer (5) von der äußeren Umgebung isoliert wird, und eine offene Position, in der der Benutzer Zugang zur Brühkammer (5) hat;
- ein Gehäuse (7), das sich auf dem Körper (2) unter der Brühkammer (5) befindet; und
- eine Kanne (8), die in das Gehäuse (7) eingesetzt ist, deren obere Oberfläche mindestens teilweise offen ist und in die das in der Brühkammer (5) gebrühte Getränk überführt wird; und
- eine Förderleitung (9), die für die Förderung des im Wasserbehälter (3) erwärmten Wassers zur Brühkammer (5) sorgt,
**gekennzeichnet durch**
- ein Sicherheitselement (10), dass die Förderleitung (9) zusammendrückt, wenn der Benutzer die Abdeckung (6) in die offene Position ändert, wenn das Wasser in die Brühkammer (5) geliefert wird, so dass die Zufuhr des Wassers unterbrochen wird.

2. Eine Heißgetränkezubereitungsmaschine (1), wie in Anspruch 1 aufgeführt, **ist dadurch gekennzeichnet, dass** das Sicherheitselement (10) zwischen der Abdeckung (6) und dem Körper (2) vorgesehen ist sich senkrecht zur Förderleitung (9) erstreckt, wenn sich die Abdeckung (6) in Offenstellung befindet, um die Förderleitung (9) zu quetschen, und es ermöglicht, dass die sich von dem Körper (2) erstreckende Förderleitung (9) gebogen wird, um sich in die Brühkammer (5) zu erstrecken, wenn sich die Abdeckung (6) in der geschlossenen Position befindet.

3. Eine Heißgetränkezubereitungsmaschine (1), wie in Anspruch 1 oder 2 aufgeführt, **ist dadurch gekennzeichnet, dass** eine Pumpe (11), die Wasser aus dem Wasserbehälter (3) ansaugt, um durch die Förderleitung (9) zu fließen, und eine Steuereinheit (13), die erfasst, dass die Abdeckung (6) in die offene Position geändert wird, wenn die Durchflussrate des durch die Förderleitung (9) fließenden Wassers abnimmt und somit die Pumpe (11) stoppt und den Durchfluss durch die Förderleitung (9) unterbricht.

4. Eine Heißgetränkezubereitungsmaschine (1), wie in einem der vorherigen Ansprüchen aufgeführt, **ist dadurch gekennzeichnet, dass** ein Manometer (12), das an der Förderleitung (9) vorgesehen ist, und die Steuereinheit (13), die feststellt, dass die Abdeckung (6) in Abhängigkeit von der vom Manometer (12) erhaltenen Information in die offene Position geändert wird, wenn die Durchflussrate des durch die Förderleitung (9) fließenden Wassers abnimmt und somit den Fluss unterbricht.

5. Eine Heißgetränkezubereitungsmaschine (1), wie in Anspruch 4 aufgeführt, **ist dadurch gekennzeichnet, dass** ein Verschluss (14) an der Förderleitung (9) vorgesehen ist, und die Steuereinheit (13), die den Verschluss (14) schließt, wenn die Abdeckung (6) in die offene Position geändert wird, wodurch der Wasserfluss durch die Förderleitung (9) verhindert wird.

6. Eine Heißgetränkezubereitungsmaschine (1), wie in einem den vorherigen Ansprüchen aufgeführt, **ist dadurch gekennzeichnet, dass** mindestens ein Kanal (15), der auf der bei geschlossener Abdeckung (6) in der Brühkammer (5) verbleibenden Oberfläche der Abdeckung (6) positioniert ist und es ermöglicht, in geöffneter Stellung der Abdeckung (6) das an der Abdeckung (6) herabrieselnde Wasser spritzfrei in die Brühkammer (5) zu leiten.

7. Eine Heißgetränkezubereitungsmaschine (1), wie in einem der vorherigen Ansprüchen aufgeführt, **ist dadurch gekennzeichnet, dass** eine Ablauföffnung (16), die am Ende der Förderleitung (9) an der Abdeckung (6) angeordnet ist und für die Förderung des Wassers in die Brühkammer (5) sorgt, und eine Sicherheitskappe (17), die an der Durchflussöffnung (16) vorgesehen ist und die in einer Richtung von der Abdeckung (6) in Richtung der Brühkammer (5) geöffnet werden kann.

## Revendications

1. Une machine de préparation de boissons chaudes (1) **comprenant**
- un corps (2);
- un réservoir d'eau (3) dans lequel se remplie l'eau ;
- un chauffe-eau (4) permettant de chauffer l'eau se trouvant dans le réservoir d'eau (3) ;
- une chambre d'ébouillantage (5) dans laquelle se place la matière première de la boisson à préparer, et dans laquelle se transfère l'eau chauffée du réservoir d'eau (3), où le processus d'ébouillantage s'effectue suite à l'interaction entre la matière première de la boisson et l'eau;
- un couvercle (6) qui a une position fermée où la chambre d'ébouillantage (5) est isolée de l'environnement extérieur, et une position ouverte où l'utilisateur peut accéder à la chambre d'ébouillantage (5) ;
- une unité d'encastrement (7) qui est située sur le corps (2), sous la chambre d'ébouillantage (5) ;
- un pot (8) qui est placé dans l'unité d'encastrement (7), la surface supérieure de celui-ci étant au moins partiellement ouverte et vers laquelle se transfère la boisson infusée dans la chambre d'ébouillantage (5) ; et
- une conduite de distribution (9) qui assure l'acheminement de l'eau chauffée dans le réservoir d'eau (3) vers la chambre d'ébouillantage (5),
- **caractérisé par** un élément de sécurité (10) qui comprime la conduite de distribution (9) lorsque l'utilisateur fait passer le couvercle (6) en position ouverte lors de l'acheminement de l'eau vers la chambre d'ébouillantage (5), de sorte que l'acheminement de l'eau soit arrêté.

2. Une machine de préparation de boissons chaudes (1) selon la Revendication 1, **caractérisée par** l'élément de sécurité (10) qui est prévu entre le couvercle (6) et le corps (2), qui s'étend perpendiculairement à la conduite de distribution (9) lorsque le couvercle (6) est en position ouverte, de manière à comprimer la conduite de distribution (9), et qui permet à la conduite de distribution (9) s'étendant depuis le corps (2), de se courber de manière à s'étendre dans la chambre d'ébouillantage (5) lorsque le couvercle (6) est en position fermée.

3. Une machine de préparation de boissons chaudes (1) selon la Revendication 1 ou la Revendication 2, **caractérisée par** une pompe (11) qui aspire l'eau du réservoir d'eau (3) de manière à écouler l'eau à travers la conduite de distribution (9), et une unité de contrôle (13) qui détecte que le couvercle (6) passe en position ouverte lorsque le débit de l'eau circulant dans la conduite de distribution (9) diminue, et qui arrête ainsi la pompe (11) et coupe le débit dans la conduite de distribution (9).

4. Une machine de préparation de boissons chaudes (1) selon l'une quelconque des revendications précédentes, **caractérisée par** un manomètre (12) qui est prévu sur la conduite de distribution (9), et l'unité de contrôle (13) qui détecte que le couvercle (6) passe en position ouverte en fonction de l'information reçue du manomètre (12) lorsque le débit de l'eau circulant dans la conduite de distribution (9) diminue et qui coupe ainsi le débit.

5. Une machine de préparation de boissons chaudes (1) selon la Revendication 4, **caractérisée par** un obturateur (14) qui est prévu sur la conduite de distribution (9), et l'unité de contrôle (13) qui ferme l'obturateur (14) lorsque le couvercle (6) passe en position ouverte, empêchant ainsi l'écoulement de l'eau à travers la conduite de distribution (9).

6. Une machine de préparation de boissons chaudes (1) selon l'une quelconque des revendications précédentes, **caractérisée par** au moins un canal (15) qui est positionné sur la surface du couvercle (6) restant du côté de la chambre d'ébouillantage (5) lorsque le couvercle (6) est en position fermée et qui permet à l'eau s'écoulant sur le couvercle (6) d'être acheminée dans la chambre d'ébouillantage (5) sans s'éparpiller, lorsque le couvercle (6) est en position ouverte.

7. Une machine de préparation de boissons chaudes (1) selon l'une quelconque des revendications précédentes, **caractérisée par** un orifice d'écoulement (16) qui est agencé à l'extrémité de la conduite de distribution (9), sur le couvercle (6), et qui permet l'acheminement de l'eau vers la chambre d'ébouillantage (5), et un bouchon de sécurité (17) qui est prévu sur l'orifice d'écoulement (16) et qui peut être ouvert dans un sens unidirectionnel, à partir du couvercle (6) vers la chambre d'ébouillantage (5).
